Europäisches Patentamt

European Patent Office

Office européen des brevets

(11) Numéro de publication: **0 345 154**
**A1**

## (12) DEMANDE DE BREVET EUROPEEN

(21) Numéro de dépôt: **89401486.9**

(22) Date de dépôt: **31.05.89**

(51) Int. Cl.⁴: **G 09 G 3/36**
**G 02 F 1/133**

(30) Priorité: **01.06.88 FR 8807287**

(43) Date de publication de la demande:
**06.12.89 Bulletin 89/49**

(84) Etats contractants désignés: **DE GB NL**

(71) Demandeur: **ETAT FRANCAIS représenté par le Ministère des Postes, des Télécommunications et de l'Espace**
**(Centre National d'Etudes des Télécommunications)**
**38-40 rue du Général Leclerc**
**F-92130 Issy-les-Moulineaux (FR)**

(72) Inventeur: **Maurice, François**
**125, Boulevard de la Corniche**
**F-22700 Perros Guirec (FR)**

(74) Mandataire: **Mongrédien, André et al**
**c/o BREVATOME 25, rue de Ponthieu**
**F-75008 Paris (FR)**

(54) **Ecran d'affichage permettant de visualiser le contour d'une image et procédé de commande d'un tel écran.**

㋻ Ecran d'affichage permettant de visualiser le contour d'une image et procédé de commande d'un tel écran.

Selon l'invention, la contre-électrode est gravée en motifs élémentaires électriquement isolés les uns des autres. Chaque motif recouvre en partie les électrodes adressées. L'affichage de l'image s'effectue normalement mais avec la possibilité de faire apparaître son contour, sans moyens supplémentaires.

Application à l'affichage.

FIG. 3

EP 0 345 154 A1

Bundesdruckerei Berlin

**Description**

## ECRAN D'AFFICHAGE PERMETTANT DE VISUALISER LE CONTOUR D'UNE IMAGE ET PROCEDE DE COMMANDE D'UN TEL ECRAN.

La présente invention a pour objet un écran d'affichage permettant de visualiser le contour d'une image et un procédé de commande d'un tel écran.

Elle trouve une application générale en imagerie dans divers domaines (scientifique, professionnel ou médical) et en métrologie de l'image.

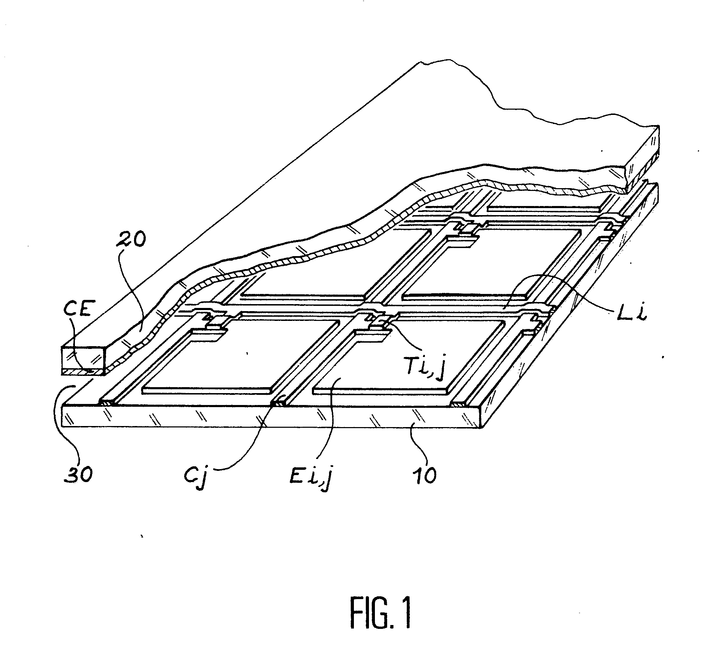

Un écran d'affichage conforme à l'art antérieur est décrit sur la figure 1. Tel que représenté il comprend :
- un premier substrat 10 recouvert d'une matrice d'électrodes de commande Eij définissant autant de pixels, et recouvert de lignes d'adressage Li et de colonnes d'adressage Cj aptes à adresser sur chaque électrode Eij une tension appropriée,
- un second substrat 20 recouvert d'une contre-électrode CE,
- entre les deux substrats 10 et 20 un matériau électro-optique 30, par exemple un film de cristal liquide.

A chaque croisement d'une ligne d'adressage Li et d'une colonne d'adressage Cj se trouve un transistor Tij.

L'application de certaines tensions sur les lignes et les colonnes permet d'afficher, une image point par point ou ligne par ligne.

Dans certains domaines professionnels, on a souvent besoin d'extraire, d'une image bidimensionnelle, les caractéristiques de certains objets représentés. Il est alors pratique de faire apparaître les contours de ces images.

Cela nécessitait, jusqu'à ce jour, l'utilisation d'un calculateur spécialisé dans l'extraction de contour. Mais ces moyens de calcul grèvent le prix de l'équipement.

Le but de l'invention est d'offrir la possibilité de visualiser les contours d'une image, seuls ou en surimpression avec l'image elle-même, sans moyen de calcul annexe.

En utilisant l'écran de l'invention en lieu et place d'un système de visualisation classique, on a directement la possibilité de visualiser une image, ses contours, ou un mélange des deux en proportion variable.

Ce but est atteint, selon l'invention, par l'utilisation d'un écran caractérisé par le fait que la contre-électrode du second substrat est gravée sur au moins une partie de sa surface en motifs élémentaires électriquement isolés les uns des autres (potentiel flottant), chaque motif recouvrant en partie des électrodes adjacentes du premier substrat.

Pour commander un tel écran, on applique aux lignes et aux colonnes d'adressage des tensions aptes à faire apparaître, sur chaque électrode :
- pour une parité de trame, une tension d'un premier type de la forme Vid (1 + k) + C,
- pour l'autre parité de trame, une tension d'un second type de la forme Vid (1 - k) - C,
où Vid est une tension définie par l'affichage à obtenir, k un coefficient numérique et C une tension constante donnée, l'application de ces tensions étant telle que chaque motif de la contre-électrode présente, à chaque trame, autant de surface en regard d'électrodes excitées par une tension du premier type que de surface en regard d'électrodes excitées par une tension du second type.

Comme on le comprendra mieux par la suite, cette gravure de la contre-électrode et ce procédé de commande, rendent possible le renforcement des contours d'une image, sans entraver le mode normal d'affichage.

De toute façon, les caractéristiques et avantages de l'invention apparaîtront mieux à la lumière de la description qui va suivre. Cette description porte sur des exemples de réalisation donnés à titre illustratif et nullement limitatif et elle se réfère à des dessins annexés sur lesquels : - la figure 1, déjà décrite, représente un écran d'affichage à cristaux liquides selon l'art antérieur, - la figure 2 montre, en coupe, un écran selon l'invention, - la figure 3 illustre un premier mode de réalisation de la gravure de la contre-électrode, - la figure 4 illustre un deuxième mode de réalisation de la gravure de la contre-électrode, - la figure 5 illustre un troisième mode de réalisation de la gravure de la contre-électrode.

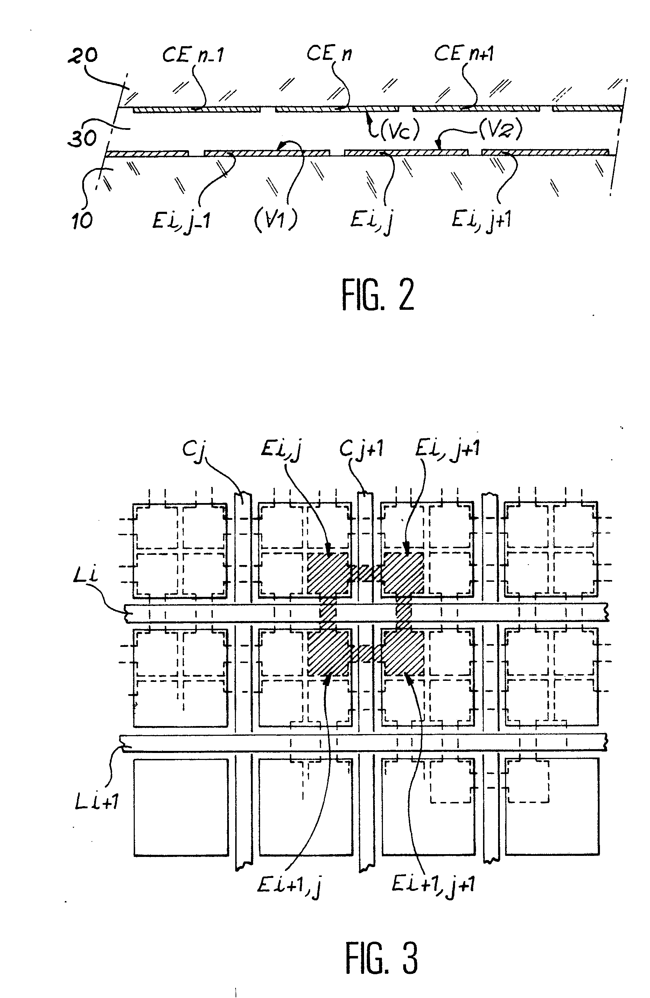

Sur la figure 2, on voit, en coupe, un écran d'affichage avec ses deux substrats 10 et 20. Sur le premier, on voit des électrodes Ei,j-1 ; Ei,j ; Ei,j+1 (la coupe est censée être effectuée parallèlement à une ligne d'adressage Li à travers les électrodes) ; sur le substrat 20, la contre-électrode est gravée en motifs CEn-1, CEn, CEn+1, etc... Ces motifs sont électriquement isolés les uns des autres et recouvrent en partie les électrodes du substrat 10. Ainsi, le motif CEn recouvre la moitié droite de l'électrode Ei,j-1 et la moitié gauche de l'électrode Ei,j.

Pour décrire le principe de fonctionnement de l'écran de l'invention, on peut supposer dans un premier temps qu'on a affaire à un écran fictif qui serait linéaire avec seulement une ligne d'électrodes et des motifs conducteurs gravés disposés en regard.

Les tensions appliquées sur les deux électrodes adjacentes Ei,j-1 et Ei,j sont notées V1 et V2. La tension apparaissant sur le motif CEn de la contre-électrode est notée VC.

On distinguera le cas de l'affichage d'une image classique, celui de l'affichage des contours d'une image et celui de l'affichage d'une image avec renforcement des contours :

2

### a) affichage d'une image classique :

On veut afficher un gris correspondant au niveau de tension Vid. On applique alors sur les électrodes :
i) pendant les trames paires :
V1 = Vid + C
V2 = -Vid - C
C est une tension constante liée à l'éventuel seuil du cristal liquide.
Vc étant flottant, il prend la valeur :

$$V_c = \frac{V1 + V2}{2} = 0$$

ii) pendant les trames impaires :
V1 = -Vid - C
V2 = Vid + C
d'où Vc = 0.
Le cristal liquide est alors excité au voisinage du motif CEn par un signal carré de valeur efficace C + Vid.
Le résultat est alors l'affichage en contraste normal de l'image, bien que la contre-électrode soit portée à un potentiel flottant.

### b) Affichage des contours de l'image :

On applique dans ce cas :
i) trames paires :
V1 = Vid1 + C
V2 = Vid2 - C

$$V_c = \frac{V1 + V2}{2} = \frac{Vid1 + Vid2}{2}$$

$$d'où \quad V1 - V_c = \frac{Vid1 - Vid2}{2} + C = v + C$$

$$avec \quad v = \frac{Vid1 - Vid2}{2}$$

ii) trames impaires :
V1 = Vid1 - C
V2 = Vid2 + C

$$V_c = \frac{V1 + V2}{2} = \frac{Vid1 + Vid2}{2}$$

$$V1 - V_c = \frac{Vid1 - Vid2}{2} - C = v - C$$

On a alors :

On a alors :

$$(V1 - V_c)_{RMS} = C \sqrt{1 + \frac{v^2}{c^2}} \qquad (1)$$

On constate, à l'analyse de la formule (1), que si Vid1 = Vid2 (ce qui correspond à une plage uniforme) alors

3

$(V1 - VC)_{RMS} = C$ : on affiche alors un niveau de luminance qui est indépendant du signal vidéo.

En revanche, si l'on est sur un contour, alors $v \neq 0$ et le niveau d'excitation du cristal liqui de est plus élevé.

On a donc bien obtenu le résultat annoncé : affichage du contour sur un fond uniforme.

La formule (1) montre qu'il s'agit là d'un effet du second ordre en v, ce qui procure une certaine immunité au bruit.

### c) Affichage d'une image avec renforcement des contours :

Ce mode de fonctionnement est la combinaison des deux précédents.

On forme dans ce cas :

i) trames paires :

V1 = Vid1 (1 + k) + C ; V2 = Vid2 (1 - k) - C ;

Vc = Vid + kv

$$avec \quad v = \frac{Vid1 - Vid2}{2} \quad et \quad Vid = \frac{Vid1 + Vid2}{2} ;$$

d'où V1 - Vc = v + kVid + C

ii) trames impaires :

V1 = Vid1 (1 - k) -C ; V2 = Vid2 (1 + k) + C

Vc = Vid - kv

d'où V1 - Vc = v - k Vid - C

On en déduit :

$$(V1 - Vc)_{RMS} = (C + k \; Vid) \sqrt{1 + \frac{v^2}{(C + k \; Vid)^2}}$$

On trouve le produit de deux termes :

* l'un (C + k Vid) qui correspond à l'apparition de l'image en contraste normal,
* l'autre

$$* \; L'autre \sqrt{1 + \frac{v^2}{(C + k \; Vid)^2}}$$

qui correspond à la surintensité sur une frontière.

Le dispositif peut donc très simplement faire un mélange de l'image et d'une intensification des contours de celle-ci. Les termes du mélange sont commandés par des réglages analogiques de gain dans la partie amplification vidéo.

Les paramètres C, Vid et k permettent de commander séparément la luminosité moyenne, celle des contours, et celle de l'image.

Les figures 3, 4 et 5 illustrent quelques modes particuliers de réalisation d'un écran selon l'invention.

Sur la figure 3, un motif de la contre-électrode est représenté hachuré. Ce motif est disposé en regard de la ligne d'adressage Li et de la colonne Cj. Il recouvre un quart des pixels Pij ; Pi+1,j ; Pi,j+1 et Pi+1,j+1.

La gravure fait en sorte de minimiser le recouvrement parasite avec les lignes et les colonnes.

Le fonctionnement électrique de cet écran est le suivant.

Par analogie avec le cas unidimensionnel (Fig. 2) on forme deux types de tensions :

Vid (1 + k) + C (type 1)

Vid (1 - k) - c (type 2).

Chacune des tensions Vij, Vi,j+1, Vi+1,j, Vi+1 appliquées aux pixels sera du type 1 ou du type 2 avec cependant :

- deux d'entre elles du type 1, les deux autres du type 2,
- changement de type à chaque trame.

La tension efficace agissant sur le cristal liquide sera alors :

$$V_{RMS} = (C + k \; Vid) \sqrt{1 + \frac{v^2}{(C + k \; Vid)^2}}$$

avec :

$$V\,i\,d\ =\ \frac{Vi_{,j}\ +\ Vi_{,j+1,j}\ +\ Vi_{,j+1}\ +\ Vi+1_{,j+1}}{4}$$

et v = Vij - Vid.

Le dispositif fonctionne comme dans le cas unidimensionnel précédemment décrit, avec affichage à volonté de l'image et/ou de ses contours.

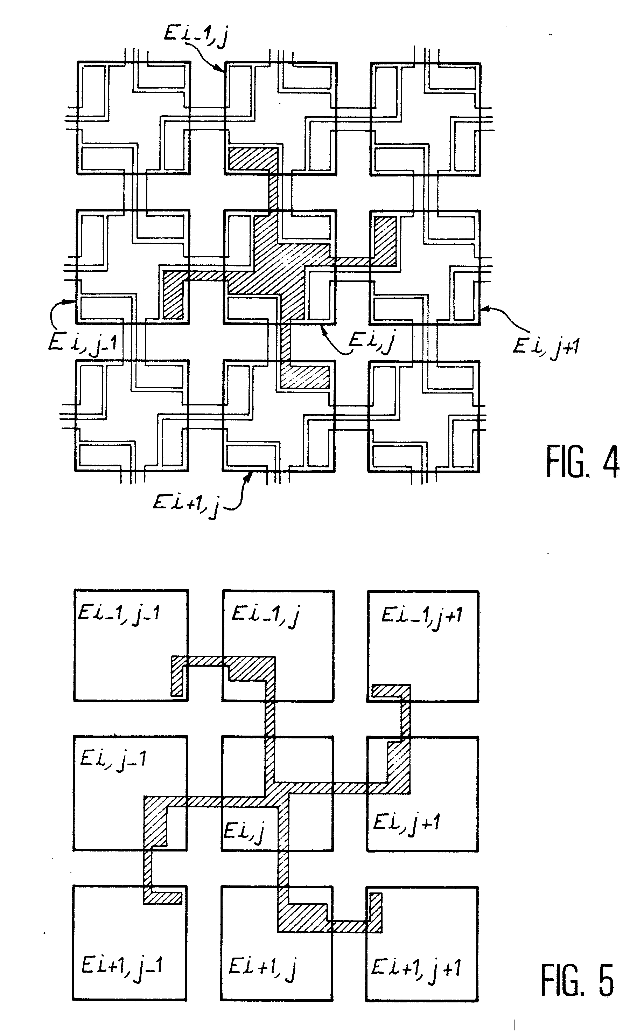

Les figures 4 et 5 montrent que l'on peut graver la contre-électrode selon d'autres schémas que celui de base de la figure 3. La règle à respecter pour le dessin est d'avoir, à chaque instant, autant de surface en regard des électrodes excitées par des tensions de type 1 que de surface en regard d'électrodes excitées par des tensions de type 2.

Cette règle est satisfaite pour les dessins des figures 4 et 5 à condition de changer de type d'excitation à chaque ligne et à chaque colonne.

Sur la figure 4, chaque motif de la contre-électrode recouvre la moitié centrale d'une électrode Pij et un huitième en coin de chacune des quatre électrodes adjacentes (Ei,j-1 ; Ei,j+1 ; Ei-1,j ; Ei+1,j).

Sur la figure 5, chaque motif recouvre le quart central d'une électrode Pij, le huitième des quatre électrodes adjacentes (Ei,j-1 ; Ei,j+1 ; Ei-1,j ; Ei+1,j) et le seizième, en coin, des quatre électrodes deuxième voisin.

Les schémas de gravure des figures 3 à 5 peuvent ne concerner qu'une partie de la contre-électrode, la partie restante non gravée étant utilisable pour l'affichage de texte en haute résolution.

On peut profiter de l'opération de gravure de la contre-électrode pour déposer, entre les zones conductrices une matière isolante opaque qui contribuera à un accroissement du contraste de l'écran.

## Revendications

1. Ecran d'affichage comprenant :
- un premier substrat (10) recouvert d'une matrice d'électrodes de commande (Ei,j) définissant autant de pixels (Pi,j), et recouvert de lignes d'adressage (Li) et de colonnes d'adressage (Cj) aptes à adresser à chaque électrode une tension appropriée (V1, V2),
- un second substrat (20) recouvert d'une contre-électrode (CE) en regard des électrodes,
- entre les deux substrats (10, 20) un matériau électro-optique (30),
cet écran étant caractérisé par le fait que la contre-électrode (CE) est gravée sur au moins une partie de sa surface, en motifs élémentaires (CEn) électriquement isolés les uns des autres, chaque motif (CEn) recouvrant en partie des électrodes adjacentes (Eij).

2. Ecran d'affichage selon la revendication 1, caractérisé par le fait que chaque motif de la contre-électrode recouvre un quart en coin de quatre électrodes adjacentes (Ei,j ; Ei,j+1 ; Ei+1,j ; Ei+1,j+1).

3. Ecran d'affichage selon la revendication 1, caractérisé par le fait que chaque motif de la contre-électrode recouvre la moitié centrale d'une électrode (Ei,j) et un huitième en coin de chacune des quatre électrodes (Ei,j-1 ; Ei,j+1 ; Ei-1,j ; Ei+1,j) qui entourent ladite électrode.

4. Ecran d'affichage selon la revendication 1, caractérisé par le fait que chaque motif de la contre-électrode recouvre un quart central d'une électrode Ei,j, un huitième de quatre électrodes adjacentes (Ei-1,j ; Ei+1,j ; Ei,j-1 ; Ei,j+1) et un seizième en coin de quatre électrodes second voisin, Ei-j,j-1 ; Ei+1,j-1 ; Ei-1,j+1 ; Ei+1,j+1).

5. Procédé de commande de l'écran d'affichage selon la revendication 1, caractérisé par le fait qu'il consiste à appliquer aux lignes (Li) et aux colonnes (Cj) d'adressage des tensions aptes à faire apparaître, sur chaque électrode :
- pour une parité de trame, une tension d'un premier type de la forme Vid (1 + k) + C,
- pour l'autre parité de trame, une tension d'un second type de la forme Vid (1 - k) - C,
où Vid est une tension définie par l'affichage à obtenir, k un coefficient numérique et C une tension constante donnée, l'application de ces tensions étant telle que chaque motif de la contre-électrode présente, à chaque trame, autant de surface en regard d'électrodes excitées par une tension du premier type que de surface en regard d'électrodes excitées par une tension du second type.

6. Procédé selon la revendication 5, caractérisé par le fait que chaque électrode reçoit alternativement d'une trame sur l'autre une tension du premier type de la forme Vid + C et une tension du second type de la forme -Vid - C, ce qui se traduit par un affichage en contraste normal.

7. Procédé de commande selon la revendication 5, caractérisé par le fait que, pour visualiser les contours d'une image, on applique aux électrodes :
- pendant les trames paires :
une tension V1 = Vid1 + C sur une première électrode,
une tension V2 = Vid2 - C sur l'électrode adjacente, - pendant les trames impaires :
une tension V1 = Vid1 - C sur ladite première électrode,
une tension V2 = Vid2 + C sur ladite électrode adjacente.

20

CE

Li

Ti,j

30

Cj

Ei,j

10

FIG. 1

FIG. 2

FIG. 3

FIG. 4

FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 134 684 (EPSON CORP.)<br>* Page 1, lignes 44-84 *<br>--- | 1 | G 09 G 3/36<br>G 02 F 1/133 |
| A | PATENT ABSTRACTS OF JAPAN, vol. 10, no. 149 (P-461)[2206], 30 mai 1986, page 88 P 461; & JP-A-61 3119 (CANON K.K.) 09-01-1986<br>--- | 1 | |
| A | SOVIET PHYSICS TECHNICAL PHYSICS, vol. 33, no. 1, janvier 1988, pages 113-114, American Institute of Physics, New York, NY, US; M.A. GROZNOV et al.: "Contouring of optical images by semiconductor-liquid-crystal light modulators with orientational-texture and cholesteric-nematic transitions"<br>* Page 113, colonne de gauche, lignes 1-12 *<br>----- | 1 | |

**DOMAINES TECHNIQUES RECHERCHES (Int. Cl.4)**

G 02 F 1/00

Le présent rapport a été établi pour toutes les revendications

| Lieu de la recherche | Date d'achèvement de la recherche | Examinateur |
|---|---|---|
| LA HAYE | 07-09-1989 | DIOT P.M.L. |